(19) Europäisches Patentamt
European Patent Office
Office européen des brevets

(11) EP 0 858 462 B1

(12) **EUROPEAN PATENT SPECIFICATION**

(45) Date of publication and mention of the grant of the patent:
**03.07.2002 Bulletin 2002/27**

(21) Application number: **96935872.0**

(22) Date of filing: **20.09.1996**

(51) Int Cl.[7]: **C07F 17/00**, C08F 10/00

(86) International application number:
**PCT/US96/15074**

(87) International publication number:
**WO 97/15582 (01.05.1997 Gazette 1997/19)**

# (54) SUPPORTABLE BISCYCLOPENTADIENYL METAL COMPLEXES

UNTERSTÜTZBARE BISCYCLOPENTADIENYLMETALLKOMPLEXE

COMPLEXES METALLIQUES DE BIS-CYCLOPENTADIENYLE POUVANT ETRE APPLIQUES SUR UN SUPPORT

(84) Designated Contracting States:
**BE CH DE ES FI FR GB IT LI NL SE**

(30) Priority: **27.10.1995 US 8073 P**

(43) Date of publication of application:
**19.08.1998 Bulletin 1998/34**

(73) Proprietor: **THE DOW CHEMICAL COMPANY**
**Midland, Michigan 48674 (US)**

(72) Inventors:
- **NICKIAS, Peter N.**
  **Midland, MI 48640 (US)**
- **SPENCER, Lee**
  **Pearland, TX 77584 (US)**

(74) Representative: **Burford, Anthony Frederick et al**
**W.H. Beck, Greener & Co.**
**7 Stone Buildings**
**Lincoln's Inn**
**London WC2A 3SZ (GB)**

(56) References cited:
**EP-A- 0 628 566** **EP-A- 0 659 757**
**WO-A-95/06071**

- **SOGA K. ET AL. MACROMOL. SYMP. VOL. vol. 97, pages 53 - 62**
- **SOGA K. MACROMOL. SYMP. vol. 89, pages 249 - 258**
- **SOGA K. ET AL. MACROMOL. CHEM. PHYS. vol. 195, pages 3347 - 3360**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

This invention relates to metal complexes containing two cyclopentadienyl or substituted cyclopentadienyl moieties and to addition polymerization catalysts formed therefrom that have improved catalytic performance when supported on aluminum or silicon containing supports. More particularly such complexes are Group 3, 4, or Lanthanide metal complexes containing one or more hydrocarboxy substituted silane bridging groups.

In US-A-4,892,851 there are disclosed biscyclopentadienyl Group 4 metal complexes, especially complexes of zirconium or hafnium that are usefully employed with alumoxane activating cocatalysts for use in addition polymerizations, especially the polymerization of aliphatic $\alpha$-olefins. In a series of patents, W. Spaelick has disclosed certain ring substituted stereorigid bisindenyl complexes and their use as olefin polymerization catalysts. The bridging group of such complexes generically includes silicon, germanium or tin containing divalent groups containing hydride, halogen, $C_{1-10}$ alkyl, $C_{1-10}$ fluoroalkyl, $C_{6-10}$ aryl, $C_{6-10}$ fluoroaryl, $C_{1-10}$ alkoxy, $C_{2-10}$ alkenyl, $C_{7-40}$ aralkyl, $C_{8-40}$ aralkenyl or $C_{7-40}$ alkylaryl groups or ring forming combinations thereof. Such disclosure may be found in US-A-5,243,001, US-A-5,145,819, US-A-5,304,614 and US-A-5,350,817, among others.

EP-A-0659757 discloses olefin polymerization catalysts comprising a bis(indenyl)metallocene of a Group 4, 5 or 6 metal in which the indenyl groups have different substitution patterns from each other and are bridged by the group $(CR^8R^9)_n$-$R^7$-$(CR^8R^9)_m$, in which m and n are 0,1 or 2, m+n is 0, 1 or 2, $R^7$ is selected from inter alia certain silanediyl or germanediyl groups which may have $C_{1-20}$ alkoxy substituents, and $R^8$ and $R^9$ are selected from inter alia $C_{1-20}$ alkoxy and certain hydrocarbyl groups. There is no exemplification of any bis(indenyl)metallocene containing an alkoxy group at any location in the bridging group.

WO-A-95/06071 discloses olefin polymerization catalysts comprising a mono- or di-amido silanediyl bridged bis(cyclopentadienyl) metallocene of a Group 4, 5 or 6 metal.

EP-A-0628566 discloses the preparation of supported metallocenes by reacting a cyclopentadiene-type compound having at least one active halogen with an inorganic support having surface hydroxyl groups and then reacting the obtained product with a transition metal compound. The cyclopentadiene-type compounds can be bridged compounds of the formula Z-R'-Z in which Z is cyclopentadienyl, indenyl or fluorenyl and R' is a bridging group containing an active halogen. R' can be RSiX in which R is halogen, alkyl or aryl and X is halogen and Examples I to III relate to silica-O-1-cyclo-pentadienyl-9-fluorenylmethylsilanezirconium dichloride.

Soga et al (Macromolecular Symposia 97 (1995) July, 53-62) relates to certain heterogeneous metallocene catalysts in which the metallocene is bound to surface hydroxyl groups of silica. The introduction acknowledges Soga and Nakatani (Macromolecules 23, (1990), 957) which reportedly discloses reacting tetrabutoxytitanium with calcined silica. It also acknowledges the disclosure in Collins et al (Macromolecules 25, (1992), 1780) of supported catalysts obtained by reacting $Et(Ind)_2ZrCl_2$ or $Et(IndH_4)_2ZrCl_2$ with silica or $\gamma$-alumina which had been fully hydroxylated, partially dehydroxylated or dehydroxylated or reacted with trimethylaluminium. Soga et al teaches that the metallocene compounds are decomposed during the supporting process, especially when trimethylaluminium-free silica is used, and that more tightly immobilized metallocene catalyst can be obtained by reacting a metallocene with silica modified by reaction of surface hydroxyl groups with silica tetrachloride (see precursor A on page 58). In exemplified catalysts, silica bridges two surface hydroxyl groups and two indenyl, tetrahydroindenyl or fluorenyl groups (see Table 2 on page 59). Details of preparation of these compounds are not given but it appears from Soga (Macromolecular Symposia 89 (1995) January, 249-258; see especially Figure 2) that the surface modified silica is first reacted with a lithium salt of the cyclopentadienyl compound, then with butyl lithium and finally with a transition metal tetrachloride to form the metallocene *in situ* on the support.

Soga et al also discloses , modification of surface hydroxyl groups on silica by reaction with 1,1,2,2-tetrabromoethane but the metallocene compound produced appears to be double bound to the silica substrate via an ethylene bridging group (see 4th compound in Table 2 on page 59).

Soga (Macromolecular Symposia 89 (1995) January, 249-258) relates to the activation of modified silica-supported zirconocene catalysts by trialkylaluminiums. The zirconocene moiety is formed *in situ* on the modified silica support in the manner reported above in connection with Soga et al. Soga also reports the use of calcined silica as support and refers to the possibility that supported zirconocene catalysts obtained from calcined silica can contain species in which the silica is bound to one, instead of two, surface hydroxyl groups.

Soga also refers to surface modification using 1,1,2,2-tetrabromoethane resulting in the bound metallocene but, as mentioned above, the metallocene product is bound to surface hydroxyl groups of the silane substrate via an ethylene bridging group.

Soga, Kim & Shiono (Macromolecular Chemistry and Physics 195 (1994) October, 3347-3360) compares various types of silica-supported metallocene catalysts prepared using chemically modified silica. Type 1 is metallocene immobilized on dichlorodimethylsilane-modified silica and is exemplified by the reaction product of the modified silica with $Me_2Si(Ind)_2ZrCl_2$, Et $(IndH_4)_2ZrCl_2$ or $iPr(Flu)Cp)ZrCl_2$. Type 3 is metallocene immobilized on dichlorodimethylsilane-modified silica followed by treatment with MAO and is exemplified

by reaction of the modified silica with $Me_2Si(Ind)_2ZrCl_2$. Type 4 catalyst have the metallocene formed *in situ* from the metallocene ligands immobilized on dichlorodimethylsilane-modified silica (see Schemes 1 and 2 on pages 3353/4). It appears from Soga et al that each cyclopentadienyl group of the supported metallocene is bound to the carrier by a $Me_2SiO$ group.

The present invention provides a process for preparing a supported Group 3, 4, or Lanthanide metal complex comprising contacting a metal complex corresponding to the formula:

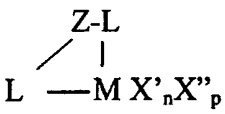

or a dimer, solvated adduct, chelated derivative or mixture thereof,
wherein:

L independently each occurrence is a delocalized π-bonded group that is bound to M and contains up to 50 nonhydrogen atoms;
M is a metal of Group 3, 4 or the Lanthanide series of the Periodic Table of the Elements;
Z is a covalently bound, divalent substituent of up to 50 non-hydrogen atoms having the formula, $-(ER^*_2)_m-$, wherein E independently each occurrence is carbon, silicon or germanium, R* independently each occurrence is selected from $C_{1-20}$ hydrocarbyl, and $C_{1-20}$ hydrocarbyloxy, with the proviso that in at least one occurrence R* is $C_{1-20}$ hydrocarbyloxy, and m is an integer from 1 to 3;
X' is a neutral Lewis base ligand having up to 20 non-hydrogen atoms;
X" independently each occurrence is a monovalent, anionic moiety selected from hydride, halo, hydrocarbyl, silyl, germyl, hydrocarbyloxy, amide, siloxy, halohydrocarbyl, halosilyl, silylhydrocarbyl, and aminohydrocarbyl having up to 20 non-hydrogen atoms, or two X" groups together form a divalent hydrocarbadiyl or neutral hydrocarbon group;
n is a number from 0 to 3; and
p is an integer from 0 to 2,

with an aluminum- or silicon-containing substrate (a) containing hydroxyl, or pendant silane -(Si-R)=, or chlorosilane -(Si-Cl)= functionality, wherein R is a $C_{1-10}$ hydrocarbyl group, with the proviso that the surface hydroxyl content of a hydroxyl functionalized substrate is less than 0.8 mmol per gram support or (b) that has been treated with an alumoxane or with an aluminum compound of the formula $AlR^1_{x'}R^2_{y'}$, wherein $R^1$ independently each occurrence is hydride or R; $R^2$ is hydride, R or OR; x' is 2 or 3; y' is 0 or 1 and the sum of x' and y' is 3, whereby the metal complex is chemically bound to the substrate.

All reference to the Periodic Table of the Elements herein shall refer to the Periodic Table of the Elements, published and copyrighted by CRC Press, Inc., 1989. Also, any reference to a Group or Groups shall be to the Group or Groups as reflected in this Periodic Table of the Elements using the IUPAC system for numbering groups.

Suitable L groups for use herein include any neutral or anionic π-electron containing moiety capable of forming a delocalized bond with the Group 3, 4 or Lanthanide metal.
Examples of such neutral groups include arene moieties such as benzene, anthracene or naphthalene, as well as substituted derivatives of such groups. Examples of anionic π-electron containing moieties include allyl, pentadienyl, cyclopentadienyl, cyclohexadienyl, as well as substituted derivatives of such groups.

By the term "derivative" when used to describe the above substituted, delocalized π-bonded groups is meant that each atom in the delocalized π-bonded group may independently be substituted with a radical selected from hydrocarbyl radicals, halo-, alkoxy-, amino- or cyano-substituted hydrocarbyl radicals, and hydrocarbyl-substituted metalloid radicals wherein the metalloid is selected from Group 14 of the Periodic Table of the Elements. Suitable substituents of the delocalized π-bonded groups contain from 1 to 20 nonhydrogen atoms. Suitable hydrocarbon substituents include straight and branched alkyl radicals, cycloalkyl radicals, aryl radicals, and alkyl-substituted cycloalkyl or aryl radicals. In addition two or more such radicals may together form a fused ring system or a hydrogenated fused ring system. Examples of the latter are indenyl-, tetrahydroindenyl-, fluorenyl-, and octahydrofluorenyl- groups, as well as ring alkyl substituted derivatives thereof. Examples of suitable hydrocarbyl-substituted organo-metalloid radicals include trimethylsilyl, triethylsilyl, ethyldimethylsilyl, methyldiethylsilyl, triphenylgermyl, and trimethylgermyl.

Preferred L groups are anionic L groups, including, cyclopentadienyl, indenyl, fluorenyl, tetrahydroindenyl, tetrahydrofluorenyl, octahydrofluorenyl, pentadienyl, cyclohexadienyl, dihydroanthracenyl, hexahydroanthracenyl, decahydroanthracenyl groups, and $C_{1-10}$ hydrocarbyl-substituted derivatives thereof. Most preferred anionic L groups are pentamethylcyclopentadienyl, 2-methylindenyl, 3-methylindenyl, 2,3-dimethylindenyl, 2-methyl-4-phenylindenyl, and 2-methyl-4-naphthylindenyl.
Examples of highly preferred complexes for use in catalyst systems according to the present invention correspond to the formula:

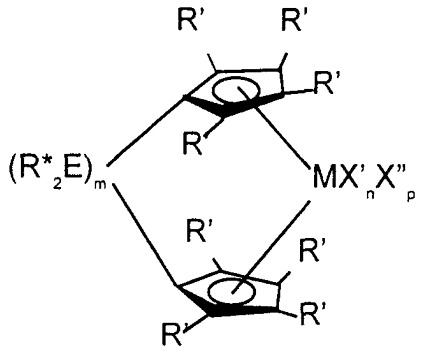

wherein:

M is titanium, zirconium or hafnium, in the +2, +3 or +4 formal oxidation state;

E independently each occurrence is carbon or silicon;

R* independently each occurrence is selected from $C_{1-6}$ hydrocarbyl, and $C_{1-6}$ hydrocarbyloxy, with the proviso that in at least one occurrence R* is $C_{1-6}$ hydrocarbyloxy;

m is 1 or 2;

R' independently in each occurrence is selected from hydrogen, hydrocarbyl, silyl, germyl, cyano, halo and combinations thereof, said R' having up to 20 non-hydrogen atoms each, or adjacent R' groups together form a divalent derivative that is a hydrocarbadiyl, siladiyl or germadiyl group;

X' is a conjugated diene having from 4 to 30 non-hydrogen atoms, which forms a π-complex with M when M is in the +2 formal oxidation state, whereupon n is 1 and p is 0;

X" each occurrence is an anionic ligand group that is covalently bonded to M when M is in the +3 or +4 formal oxidation state, whereupon n is 0 and p is 1 or 2, and optionally two X" groups together for a divalent anionic ligand group.

Preferably, R' independently in each occurrence is selected from hydrogen, methyl, ethyl, and all isomers of propyl, butyl, pentyl and hexyl, as well as cyclopentyl, cyclohexyl, norbornyl, phenyl, naphthyl, benzyl, and trimethyl silyl; or adjacent R' groups are linked together thereby forming a fused ring system such as an indenyl, 2-methylindenyl, 3-methylindenyl, 2,3-dimethylindenyl, 2-methyl-4-phenylindenyl, 2-methyl-4-naphthylindenyl, tetrahydroindenyl, fluorenyl, tetrahydrofluorenyl, or octahydrofluorenyl group.

Preferred L groups include cyclopentadienyl, tetramethylcyclopentadienyl, indenyl, tetrahydroindenyl, fluorenyl, tetrahydrofluorenyl, octahydrofluorenyl, or one of the foregoing groups further substituted with one or more methyl, ethyl, propyl, butyl, pentyl, hexyl, (including branched and cyclic isomers), norbornyl, benzyl, or phenyl groups.

Examples of suitable X' moieties include: $\eta^4$-1,4-diphenyl-1,3-butadiene; $\eta^4$-1,3-pentadiene; $\eta^4$-1-phenyl-1,3-pentadiene; $\eta^4$-1,4-dibenzyl-1,3-butadiene; $\eta^4$-2,4-hexadiene; $\eta^4$-3-methyl-1,3-pentadiene; $\eta^4$-1,4-ditolyl-1,3-butadiene; and $\eta^4$-1,4-bis(trimethylsilyl)-13-butadiene. Of the foregoing, 1,4-diphenyl-1,3-butadiene, 1-phenyl-1,3-pentadiene, and 2,4 hexadiene are preferred.

Examples of suitable X" moieties include hydride, chloride, methyl, benzyl, phenyl, tolyl, t-butyl, methoxide, and trimethylsilyl or two X" groups together are 1,4-butanediyl, s-cis(1,3-butadiene), or s-cis (2,3-dimethyl-1,3-butadiene).

Most preferred Z groups are those wherein E is silicon, m is 1, and R* in at least one occurrence is methoxide, ethoxide, propoxide or butoxide.

In the most preferred embodiment -Z- is ethoxymethyl-silanediyl, isopropoxymethylsilanediyl, 2-butoxymethylsilanediyl, diethoxysilanediyl, diisopropoxysilanediyl, or di(2-butoxy)silanediyl.

Illustrative derivatives of Group 3, 4 or Lanthanide metals that may be employed in the practice of the present invention include:

<u>ethoxymethylsilanediyl complexes:</u>

ethoxymethylsilanebis(cyclopentadienyl)zirconium(II) 1,4-diphenyl-1,3-butadiene,
ethoxymethylsilanebis(pentamethylcyclopentadienyl)zirconium (II) 1,4-diphenyl-1,3-butadiene,
ethoxymethylsilanebis(pentamethylcyclopentadienyl)zirconium (II) 1,3-pentadiene,
ethoxymethylsilanebis(cyclopentadienyl)zirconium (III) 2-(N,N-dimethylamino)benzyl,
ethoxymethylsilanebis(cyclopentadienyl)zirconium (IV) dimethyl,
ethoxymethylsilanebis(pentamethylcyclopentadienyl)zirconium (IV) dimethyl,
ethoxymethylsilane(cyclopentadienyl)(fluorenyl)zirconium (IV) dimethyl,
ethoxymethylsilanebis (pentamethylcyclopentadienyl)zirconium (IV) dibenzyl,
ethoxymethylsilanebis(2-methylindenyl)zirconium (II) 1,4-diphenyl-1,3-butadiene,
ethoxymethylsilanebis(2-methylindenyl)zirconium (II) 1,3-pentadiene,
ethoxymethylsilanebis(2-methylindenyl)zirconium (III) 2-(N,N-dimethylamino)benzyl,
ethoxymethylsilanebis(2-methylindenyl)zirconium (IV) dimethyl,
ethoxymethylsilanebis(2-methylindenyl)zirconium (IV) dibenzyl,
ethoxymethylsilanebis(3-methylindenyl)zirconium (II) 1,4-diphenyl-1,3-butadiene,
ethoxymethylsilanebis(3-methylindenyl)zirconium (II) 1,3-pentadiene,
ethoxymethylsilanebis(3-methylindenyl)zirconium (III) 2-(N,N-dimethylamino)benzyl,
ethoxymethylsilanebis(3-methylindenyl)zirconium (IV) dimethyl,
ethoxymethylsilanebis(3-methylindenyl)zirconium (IV) dibenzyl,
ethoxymethylsilanebis(2,3-dimethylindenyl) zirconium (II) 1,4-diphenyl-1,3-butadiene,
ethoxymethylsilanebis(2,3-dimethylindenyl) zirconium (II) 1,3-pentadiene,
ethoxymethylsilanebis(2,3-dimethylindenyl) zirconium (III) 2-(N,N-dimethylamino)benzyl,
ethoxymethylsilanebis(2,3-dimethylindenyl) zirconium (IV) dimethyl,
ethoxymethylsilanebis(2,3-dimethylindenyl) zirconium (IV) dibenzyl,
ethoxymethylsilanebis(2-methyl-4-phenylindenyl)zirconium (II) 1,4-diphenyl-1,3-butadiene,
ethoxymethylsilanebis(2-methyl-4-phenylindenyl)zirconium (II) 1,3-pentadiene,
ethoxymethylsilanebis(2-methyl-4-phenylindenyl)zirconium (III) 2-(N,N-dimethylamino)benzyl,
ethoxymethylsilanebis(2-methyl-4-phenylindenyl)zirconium (IV) dimethyl,
(ethoxymethylsilanebis(2-methyl-4-phenylindenyl)zirconium (IV) dibenzyl,
ethoxymethylsilanebis(tetrahydrofluorenyl)zirconium (II) 1,4-diphenyl-1,3-butadiene,
ethoxymethylsilanebis(tetrahydrofluorenyl)zirconium (II) 1,3-pentadiene,
ethoxymethylsilanebis(tetrahydrofluorenyl)zirconium (III) 2-(N,N-dimethylamino)benzyl,
ethoxymethylsilanebis(tetrahydrofluorenyl)zirconium (IV) dimethyl,
ethoxymethylsilanebis(tetrahydrofluorenyl)zirconium (IV) dibenzyl,

<u>isopropoxymethylsilanediyl complexes:</u>

isopropoxymethylsilanebis(cyclopentadienyl) zirconium(II) 1,4-diphenyl-1,3-butadiene,
isopropoxymethylsilanebis(pentamethylcyclopentadienyl)zirconium (II) 1,4-diphenyl-1,3-butadiene,
isopropoxymethylsilanebis(pentamethylcyclopentadienyl)zirconium (II) 1,3-pentadiene,
isopropoxymethylsilanebis(cyclopentadienyl) zirconium (III) 2-(N,N-dimethylamino)benzyl,
isopropoxymethylsilanebis(cyclopentadienyl) zirconium (IV) dimethyl,
isopropoxymethylsilanebis(pentamethylcyclopentadienyl)zirconium (IV) dimethyl,
isopropoxymethylsilane(cyclopentadienyl)(fluorenyl)zirconium (IV) dimethyl,
isopropoxymethylsilanebis (pentamethylcyclopentadienyl)zirconium (IV) dibenzyl,
isopropoxymethylsilanebis(2-methylindenyl) zirconium (II) 1,4-diphenyl-1,3-butadiene,
isopropoxymethylsilanebis(2-methylindenyl) zirconium (II) 1,3-pentadiene,
isopropoxymethylsilanebis(2-methylindenyl) zirconium (III) 2-(N,N-dimethylamino)benzyl,
isopropoxymethylsilanebis(2-methylindenyl) zirconium (IV) dimethyl,
isopropoxymethylsilanebis(2-methylindenyl) zirconium (IV) dibenzyl,
isopropoxymethylsilanebis(3-methylindenyl) zirconium (II) 1,4-diphenyl-1,3-butadiene,
isopropoxymethylsilanebis(3-methylindenyl) zirconium (II) 1,3-pentadiene,
isopropoxymethylsilanebis(3-methylindenyl) zirconium (III) 2-(N,N-dimethylamino)benzyl,
isopropoxymethylsilanebis(3-methylindenyl) zirconium (IV) dimethyl,
isopropoxymethylsilanebis(3-methylindenyl) zirconium (IV) dibenzyl,
isopropoxymethylsilanebis(2,3-dimethylindenyl)zirconium (II) 1,4-diphenyl-1,3-butadiene,
isopropoxymethylsilanebis(2,3-dimethylindenyl)zirconium (II) 1,3-pentadiene,
isopropoxymethylsilanebis(2,3-dimethylindenyl)zirconium (III) 2-(N,N-dimethylamino)benzyl,
isopropoxymethylsilanebis(2,3-dimethylindenyl)zirconium (IV) dimethyl,
isopropoxymethylsilanebis(2,3-dimethylindenyl)zirconium (IV) dibenzyl,
isopropoxymethylsilanebis(2-methyl-4-phenylindenyl)zirconium (II) 1,4-diphenyl-1,3-butadiene,
isopropoxymethylsilanebis(2-methyl-4-phenylindenyl)zirconium (II) 1,3-pentadiene,
isopropoxymethylsilanebis(2-methyl-4-phenylindenyl)zirconium (III) 2-(N,N-dimethylamino) benzyl,
sopropoxymethylsilanebis(2-methyl-4-phenylindenyl)zirconium (IV) dimethyl,
(isopropoxymethylsilanebis(2-methyl-4-phenylindenyl)zirconium (IV) dibenzyl,
isopropoxymethylsilanebis(tetrahydrofluorenyl)zirconium (II) 1,4-diphenyl-1,3-butadiene,
isopropoxymethylsilanebis(tetrahydrofluorenyl)zirconium (II) 1,3-pentadiene,
isopropoxymethylsilanebis(tetrahydrofluorenyl)zirconium (III) 2-(N,N-dimethylamino)benzyl,
isopropoxymethylsilanebis(tetrahydrofluorenyl)zirconium (IV) dimethyl,
isopropoxymethylsilanebis(tetrahydrofluorenyl)zirconium (IV) dibenzyl,

2-butoxymethylsilanediyl complexes:

2-butoxymethylsilanebis(cyclopentadienyl)zirconium(II) 1,4-diphenyl-1,3-butadiene,
2-butoxymethylsilanebis(pentamethylcyclopentadienyl)zirconium (II) 1,4-diphenyl-1,3-butadiene,
2-butoxymethylsilanebis(pentamethylcyclopentadienyl)zirconium (II) 1,3-pentadiene,
2-butoxymethylsilanebis(cyclopentadienyl)zirconium (III) 2-(N,N-dimethylamino)benzyl,
2-butoxymethylsilanebis(cyclopentadienyl)zirconium (IV) dimethyl,
2-butoxymethylsilanebis(pentamethylcyclopentadienyl)zirconium (IV) dimethyl,
2-butoxymethylsilane(cyclopentadienyl)(fluorenyl)zirconium (IV) dimethyl,
2-butoxymethylsilanebis (pentamethylcyclopentadienyl)zirconium (IV) dibenzyl,
2-butoxymethylsilanebis(2-methylindenyl)zirconium (II) 1,4-diphenyl-1,3-butadiene,
2-butoxymethylsilanebis(2-methylindenyl)zirconium (II) 1,3-pentadiene,
2-butoxymethyisiianebis(2-methylindenyl)zirconium (III) 2-(N,N-dimethylamino)benzyl,
2-butoxymethylsilanebis(2-methylindenyl)zirconium (IV) dimethyl,
2-butoxymethylsilanebis(2-methylindenyl)zirconium (IV) dibenzyl,
2-butoxymethylsilanebis(3-methylindenyl)zirconium (II) 1,4-diphenyl-1,3-butadiene,
2-butoxymethylsilanebis(3-methylindenyl)zirconium (II) 1,3-pentadiene,
2-butoxymethylsilanebis(3-methylindenyl)zirconium (III) 2-(N,N-dimethylamino)benzyl,
2-butoxymethylsilanebis(3-methylindenyl)zirconium (IV) dimethyl,
2-butoxymethylsilanebis(3-methylindenyl)zirconium (IV) dibenzyl,
2-butoxymethylsilanebis(2,3-dimethylindenyl) zirconium (II) 1,4-diphenyl-1,3-butadiene,
2-butoxymethylsilanebis(2,3-dimethylindenyl) zirconium (II) 1,3-pentadiene,
2-butoxymethylsilanebis(2,3-dimethylindenyl) zirconium (III) 2-(N,N-dimethylamino)benzyl,
2-butoxymethylsilanebis(2,3-dimethylindenyl) zirconium (IV) dimethyl,
2-butoxymethylsilanebis(2,3-dimethylindenyl) zirconium (IV) dibenzyl,
2-butoxymethylsilanebis(2-methyl-4-phenylindenyl)zirconium (II) 1,4-diphenyl-1,3-butadiene,
2-butoxymethylsilanebis(2-methyl-4-phenylindenyl)zirconium (II) 1,3-pentadiene,
2-butoxymethylsilanebis(2-methyl-4-phenylindenyl)zirconium (III) 2-(N,N-dimethylamino) benzyl,
2-butoxymethylsilanebis(2-methyl-4-phenylindenyl)zirconium (IV) dimethyl,
(2-butoxymethylsilanebis(2-methyl-4-phenylindenyl)zirconium (IV) dibenzyl,
2-butoxymethylsilanebis(tetrahydrofluorenyl) zirconium (II) 1,4-diphenyl-1,3-butadiene,
2-butoxymethylsilanebis(tetrahydrofluorenyl) zirconium (II) 1,3-pentadiene,
2-butoxymethylsilanebis(tetrahydrofluorenyl) zirconium (III) 2-(N,N-dimethylamino)benzyl,
2-butoxymethylsilanebis(tetrahydrofluorenyl) zirconium (IV) dimethyl, and
2-butoxymethylsilanebis(tetrahydrofluorenyl) zirconium (IV) dibenzyl.

Other metal complexes, especially compounds containing other Group 3, 4 or Lanthanide metals will, of course, be apparent to those skilled in the art.

The complexes are rendered catalytically active by combination with an activating cocatalyst or by use of an activating technique. Suitable activating cocatalysts for use herein include polymeric or oligomeric alumoxanes, especially methylalumoxane, triisobutyl aluminum-modified methylalumoxane, or diisobutylalumoxane; strong Lewis acids, such as $C_{1-30}$ hydrocarbyl substituted Group 13 compounds, especially tri(hydrocarbyl)aluminum- or tri(hydrocarbyl)boron- compounds and halogenated derivatives thereof, having from 1 to 10 carbons in each hydrocarbyl or halogenated hydrocarbyl group, especially tris(pentafluorophenyl)borane; and nonpolymeric, inert, compatible, noncoordinating, ion forming compounds (including the use of such compounds under oxidizing conditions). A suitable activating technique is bulk electrolysis (explained in more detail hereinafter). Combinations of the foregoing activating cocatalysts and techniques may also be employed if desired. The foregoing activating cocatalysts and activating techniques have been previously taught with respect to different metal complexes in the following references: EP-A-277,003, US-A-5,153,157, US-A-5,064,802, EP-A-468,651, EP-A-520,732, and WO-A-93/23412.

Suitable nonpolymeric, inert, compatible, noncoordinating, ion forming compounds useful as cocatalysts in one embodiment of the present invention comprise a cation which is a Bronsted acid capable of donating a proton, and a compatible, noncoordinating, anion, $A^-$. Preferred anions are those containing a single coordination complex comprising a charge-bearing metal or metalloid core which anion is capable of balancing the charge of the active catalyst species (the metal cation) which is formed when the two components are combined. Also, said anion can be displaced by olefinic, diolefinic and acetylenically unsaturated compounds or other neutral Lewis bases such as ethers or nitriles. Suitable metals include, but are not limited to, aluminum, gold and platinum. Suitable metalloids include, but are not limited to, boron, phosphorus, and silicon. Compounds containing anions which comprise coordination

complexes containing a single metal or metalloid atom are well known and many, particularly such compounds containing a single boron atom in the anion portion, are available commercially.

Preferably such cocatalysts may be represented by the following general formula:

$$(L^*\text{-}H)^+_d\ A^{d-},$$

wherein:

L* is a neutral Lewis base;
$(L^*\text{-}H)^+$ is a Bronsted acid;
$A^{d-}$ is a noncoordinating, compatible anion having a charge of d-, and
d is an integer from 1 to 3.

More preferably d is one, that is, $A^{d-}$ is $A^-$.
Highly preferably, $A^-$ corresponds to the formula: $[BQ_4]^-$, wherein:
B is boron in the +3 formal oxidation state; and
Q independently each occurrence is selected from hydride, dialkylamido, halide, alkoxide, aryloxide, hydrocarbyl, halocarbyl, and halosubstituted-hydrocarbyl radicals, said Q having up to 20 carbons with the proviso that in not more than one occurrence is Q halide.
In a more highly preferred embodiment, Q is a fluorinated $C_{1-20}$ hydrocarbyl group, most preferably, a fluorinated aryl group, especially, pentafluorophenyl.
Illustrative, but not limiting, examples of ion forming compounds comprising proton donatable cations which may be used as activating cocatalysts in the preparation of the catalyst systems of this invention are tri-substituted ammonium salts such as:

trimethylammonium tetraphenylborate,
triethylammonium tetraphenylborate,
tripropylammonium tetraphenylborate,
tri(n-butyl)ammonium tetraphenylborate,
tri(t-butyl)ammonium tetraphenylborate,
N,N-dimethylanilinium tetraphenylborate,
N,N-diethylanilinium tetraphenylborate,
NN-dimethyl(2,4,6-trimethylanilinium) tetraphenylborate,
trimethylammonium tetrakis-(penta-fluorophenyl) borate,
triethylammonium tetrakis-(pentafluorophenyl) borate,
tripropylammonium tetrakis(pentafluorophenyl) borate,
tri(n-butyl)-ammonium tetrakis(pentafluorophenyl) borate,
tri(sec-butyl)ammonium tetrakis(pentafluorophenyl)borate,
N,N-dimethylanilinium tetrakis(pentafluorophenyl) borate,
N,N-diethylanilinium tetrakis(pentafluoro-phenyl) borate,
N,N-dimethyl(2,4,6-trimethyl-anilinium) tetrakis (pentafluorophenyl) borate,
trimethylammonium tetrakis(2,3,4,6-tetrafluorophenylborate,
triethylammonium tetrakis(2,3,4,6-tetrafluorophenyl) borate,
tripropylammonium tetrakis(2,3,4,6-tetrafluorophenyl) borate,
tri(n-butyl)ammonium tetrakis(2,3,4,6-tetrafluorophenyl) borate,
dimethyl(t-butyl)ammonium tetrakis(2,3,4,6-tetrafluorophenyl) borate,
N,N-dimethylanilinium tetrakis(2,3,4,6-tetrafluorophenyl) borate,
N,N-diethylanilinium tetrakis(2,3,4,6-tetrafluorophenyl) borate, and
N,N-dimethyl-(2,4,6-trimethylanilinium) tetrakis-(23,46-tetrafluorophenyl) borate.

Dialkyl ammonium salts such as: di-(i-propyl) ammonium tetrakis(pentafluorophenyl) borate, and dicyclohexylammonium tetrakis(pentafluorophenyl) borate.
Tri-substituted phosphonium salts such as: triphenylphosphonium tetrakis(pentafluorophenyl) borate, tri(o-tolyl)phosphonium tetrakis(penta-fluorophenyl) borate, and tri(2,6-dimethylphenyl)-phosphonium tetrakis(pentafluorophenyl) borate.
Preferred are N,N-dimethylanilinium tetrakis (pentafluorophenyl)borate and tributylammonium tetrakis(pentafluorophenyl)borate.
Another suitable ion forming, activating cocatalyst comprises a salt of a cationic oxidizing agent and a noncoordinating, compatible anion represented by the formula:

$$(Ox^{e+})_d\ (A^{d-})_e,$$

wherein:

$Ox^{e+}$ is a cationic oxidizing agent having charge e+;
e is an integer from 1 to 3; and
$A^{d-}$, and d are as previously defined.

Examples of cationic oxidizing agents include: ferrocenium, hydrocarbyl-substituted ferrocenium, $Ag^+$, or $Pb^{+2}$. Preferred embodiments of $A^{d-}$ are those anions previously defined with respect to the Bronsted acid containing activating cocatalysts, especially tetrakis (pentafluorophenyl)borate.
Another suitable ion forming, activating cocatalyst comprises a compound which is a salt of a carbenium ion or silylium ion and a noncoordinating, compatible anion represented by the formula:

$©^+ A^-$

wherein:

$©^+$ is a $C_{1-20}$ carbenium ion or a silylium ion of up to 20 noncarbon atoms; and
$A^-$ is as previously defined.

A preferred carbenium ion is the trityl cation, that is triphenylcarbenium, a preferred silylium ion is triphenylsilylium.

The foregoing activating technique and ion forming cocatalysts are also preferably used in combination with a tri(hydrocarbyl)aluminum compound having from 1 to 4 carbons in each hydrocarbyl group, an oligomeric or polymeric alumoxane compound, or a mixture of a tri(hydrocarbyl)aluminum compound having from 1 to 4 carbons in each hydrocarbyl group and a polymeric or oligomeric alumoxane.

An especially preferred activating cocatalyst comprises the combination of a trialkyl aluminum compound having from 1 to 4 carbons in each alkyl group and an ammonium salt of tetrakis(pentafluorophenyl) borate, in a molar ratio from 0.1:1 to 1:0.1, optionally up to 1000 mole percent of an alkylalumoxane with respect to M, is also present.

The activating technique of bulk electrolysis involves the electrochemical oxidation of the metal complex under electrolysis conditions in the presence of a supporting electrolyte comprising a noncoordinating, inert anion. In the technique, solvents, supporting electrolytes and electrolytic potentials for the electrolysis are used such that electrolysis byproducts that would render the metal complex catalytically inactive are not substantially formed during the reaction. More particularly, suitable solvents are materials that are: liquids under the conditions of the electrolysis (generally temperatures from 0 to 100°C), capable of dissolving the supporting electrolyte, and inert. "Inert solvents" are those that are not reduced or oxidized under the reaction conditions employed for the electrolysis. It is generally possible in view of the desired electrolysis reaction to choose a solvent and a supporting electrolyte that are unaffected by the electrical potential used for the desired electrolysis. Preferred solvents include difluorobenzene (all isomers), DME, and mixtures thereof.

The electrolysis may be conducted in a standard electrolytic cell containing an anode and cathode (also referred to as the working electrode and counter electrode respectively). Suitably materials of construction for the cell are glass, plastic, ceramic and glass coated metal. The electrodes are prepared from inert conductive materials, by which are meant conductive materials that are unaffected by the reaction mixture or reaction conditions. Platinum or palladium are preferred inert conductive materials. Normally, an ion permeable membrane such as a fine glass frit separates the cell into separate compartments, the working electrode compartment and counter electrode compartment. The working electrode is immersed in a reaction medium comprising the metal complex to be activated, solvent, supporting electrolyte, and any other materials desired for moderating the electrolysis or stabilizing the resulting complex. The counter electrode is immersed in a mixture of the solvent and supporting electrolyte. The desired voltage may be determined by theoretical calculations or experimentally by sweeping the cell using a reference electrode such as a silver electrode immersed in the cell electrolyte. The background cell current, the current draw in the absence of the desired electrolysis, is also determined. The electrolysis is completed when the current drops from the desired level to the background level. In this manner, complete conversion of the initial metal complex can be easily detected.

Suitable supporting electrolytes are salts comprising a cation and an inert, compatible, noncoordinating anion, A- . Preferred supporting electrolytes are salts corresponding to the formula:

$$G^+A^-;$$

wherein:

$G^+$ is a cation which is nonreactive towards the starting and resulting complex, and
$A^-$ is a noncoordinating, compatible anion.

Examples of cations, $G^+$, include tetrahydrocarbyl substituted ammonium or phosphonium cations having up to 40 nonhydrogen atoms. A preferred cation is the tetra-n-butylammonium cation.

During activation of the complexes of the catalyst systems of the present invention by bulk electrolysis the cation of the supporting electrolyte passes to the counter electrode and $A^-$ migrates to the working electrode to become the anion of the resulting oxidized product. Either the solvent or the cation of the supporting electrolyte is reduced at the counter electrode in equal molar quantity with the amount of oxidized metal complex formed at the working electrode.

Preferred supporting electrolytes are tetrahydrocarbylammonium salts of tetrakis(perfluoroaryl) borates having from 1 to 10 carbons in each hydrocarbyl group, especially tetra-n-butylammonium tetrakis(pentafluorophenyl) borate.

The molar ratio, with respect to M, of catalyst/cocatalyst employed preferably ranges from 1:10,000 to 100:1, more preferably from 1:5000 to 10:1, most preferably from 1:10 to 1:2.

In general, the catalysts can be prepared by combining the two components in a suitable solvent at a temperature within the range from -100°C to 300°C. The catalyst may be separately prepared prior to use by combining the respective components or prepared *in*

*situ* by combination in the presence of the monomers to be polymerized. It is preferred to form the catalyst *in situ* due to the exceptionally high catalytic effectiveness of catalysts prepared in this manner. The catalysts' components are sensitive to both moisture and oxygen and should be handled and transferred in an inert atmosphere.

The presence of the alkoxy functionality in the bridging group has been discovered to be particularly beneficial in allowing the complexes to chemically bind to aluminum or silicon atoms of the matrix or hydroxyl, silane or chlorosilane functionality of the substrate materials. Especially suited substrates include alumina or silica. Suitable supported catalyst systems are readily prepared by contacting the present metal complexes with the substrate optionally while subjecting to heating and/or reduced pressures. A Lewis base, especially a trialkylamine can be present to assist in the reaction between the support and the siloxane functionality of the metal complexes.

Preferred supports for use in the catalyst systems of the present invention include highly porous silicas, aluminas, aluminosilicates, and mixtures thereof. The most preferred support material is silica. The support material may be in granular, agglomerated, pelletized, or any other physical form. Suitable materials include, but are not limited to, silicas available from Grace Davison (division of W.R. Grace & Co.) under the designations SD 3216.30, Davison Syloid 245, Davison 948 and Davison 952, and from Degussa AG under the designation Aerosil 812; and aluminas available from Akzo Chemicals Inc. under the designation Ketzen Grade B.

Supports suitable for the catalyst systems of the present invention preferably have a surface area as determined by nitrogen porosimetry using the B.E.T. method from 10 to 1000 $m^2/g$, and preferably from 100 to 600 $m^2/g$. The pore volume of the support, as determined by nitrogen adsorption, advantageously is between 0.1 and 3 $cm^3/g$, preferably from 0.2 to 2 $cm^3/g$. The average particle size is not critical, but typically is from 0.5 to 500 μm, preferably from 1 to 100 μm.

Both silica and alumina are known to inherently possess small quantities of hydroxyl functionality attached to the crystal structure. When used as a support herein, these materials are preferably subjected to a heat treatment and/or chemical treatment to reduce the hydroxyl content thereof. Typical heat treatments are carried out at a temperature from 30 to 1000°C for a duration of 10 minutes to 50 hours in an inert atmosphere or under reduced pressure. Typical chemical treatments include contacting with Lewis acid alkylating agents such as trihydrocarbyl aluminum compounds, trihydrocarbylchloro-silane compounds, trihydrocarbylalkoxysilane compounds or similar agents. The silica or alumina materials for use herein have a surface hydroxyl content that is less than 0.8 mmol hydroxyl groups per gram of solid support, more preferably less than 0.5 mmol per gram. The hydroxyl content may be determined by adding an excess of dialkyl magnesium to a slurry of the solid support and determining the amount of dialkyl magnesium remaining in solution via known techniques. This method is based on the reaction:

$$S\text{-}OH + Mg(Alk)_2 \rightarrow S\text{-}OMg(Alk) + (Alk)H,$$

wherein S is the solid support, and Alk is a $C_{1-4}$ alkyl group.

The support may be unfunctionalized (excepting for hydroxyl groups as previously disclosed) or functionalized by treating with a silane or chlorosilane functionalizing agent to attach thereto pendant silane -(Si-R)=, or chlorosilane -(Si-Cl)= functionality, wherein R is a $C_{1-10}$ hydrocarbyl group. Suitable functionalizing agents are compounds that react with surface hydroxyl groups of the support or react with the silicon or aluminum of the matrix. Examples of suitable functionalizing agents include phenylsilane, diphenylsilane, methylphenylsilane, dimethylsilane, diethylsilane, dichlorosilane and dichlorodimethylsilane. Techniques for forming such functionalized silica or alumina compounds were previously disclosed in US-A- 3,687,920 and US-A-3,879,368.

The support may also be treated with an aluminum component selected from an alumoxane or an aluminum compound of the formula $AlR^1_{x'}R^2_{y'}$, wherein $R^1$ independently each occurrence is hydride or R; $R^2$ is hydride, R or OR; x' is 2 or 3; y' is 0 or 1 and the sum of x' and y' is 3. Examples of suitable $R^1$ and $R^2$ groups include methyl, methoxy, ethyl, ethoxy, propyl (all isomers), propoxy (all isomers), butyl (all isomers), butoxy (all isomers), phenyl, phenoxy, benzyl, and benzyloxy. Preferably, the aluminum component is selected from aluminoxanes and tri($C_{1-4}$ hydrocarbyl)aluminum compounds. Most preferred aluminum components are aluminoxanes, trimethyl aluminum, triethyl aluminum, triisobutyl aluminum, and mixtures thereof.

Alumoxanes (also referred to as aluminoxanes) are oligomeric or polymeric aluminum oxy compounds containing chains of alternating aluminum and oxygen atoms, whereby the aluminum carries a substituent, preferably an alkyl group. The structure of alumoxane is believed to be represented by the following general formulae $(\text{-}Al(R)\text{-}O)_{m'}$, for a cyclic alumoxane, and $R_2Al\text{-}O(\text{-}Al(R)\text{-}O)_{m'}\text{-}AlR_2$, for a linear compound, wherein R is as previously defined, and m' is an integer ranging from 1 to 50, preferably at least 4. Alumoxanes are typically the reaction products of water and an aluminum alkyl, which in addition to an alkyl group may contain halide or alkoxide groups. Reacting several different aluminum alkyl compounds, such as for example trimethyl aluminum and tri-isobutyl aluminum, with water yields so-called modified or mixed alumoxanes. Preferred alumoxanes are methylalumoxane and methylalumoxane modified with minor amounts of $C_{2-4}$ alkyl groups, especially isobutyl. Alumoxanes generally contain minor to substantial amounts of starting aluminum alkyl compound.

Particular techniques for the preparation of alumoxane type compounds by contacting an aluminum alkyl compound with an inorganic salt containing water of crystallization are disclosed in US-A-4,542,119. In a particular preferred embodiment an aluminum alkyl compound is contacted with a regeneratable water-containing substance such as hydrated alumina, silica or other substance. This is disclosed in EP-A-338,044. Thus the alumoxane may be incorporated into the support by reaction of a hydrated alumina or silica material, which has optionally been functionalized with silane, siloxane, hydrocarbyloxysilane, or chlorosilane groups, with a tri($C_{1-10}$ alkyl) aluminum compound according to known techniques.

The treatment of the support material in order to also include optional alumoxane or trialkylaluminum loadings involves contacting the same before, after or simultaneously with addition of the complex or activated catalyst hereunder with the alumoxane or trialkylaluminum compound, especially triethylaluminum or triisobutylaluminum. Optionally the mixture can also be heated under an inert atmosphere for a period and at a temperature sufficient to fix the alumoxane, trialkylaluminum compound, complex or catalyst system to the support. Optionally, the treated support component containing alumoxane or the trialkylaluminum compound may be subjected to one or more wash steps to remove alumoxane or trialkylaluminum not fixed to the support.

Besides contacting the support with alumoxane the alumoxane may be generated *in situ* by contacting an unhydrolyzed silica or alumina or a moistened silica or alumina with a trialkyl aluminum compound optionally in the presence of an inert diluent. Such a process is well known in the art, having been disclosed in EP-A-250,600, US-A-4,912,075, and US-A-5,008,228. Suitable aliphatic hydrocarbon diluents include pentane, isopentane, hexane, heptane, octane, isooctane, nonane, isononane, decane, cyclohexane, methylcyclohexane and combinations of two or more of such diluents. Suitable aromatic hydrocarbon diluents are benzene, toluene, xylene, and other alkyl or halogen substituted aromatic compounds. Most preferably, the diluent is an aromatic hydrocarbon, especially toluene. After preparation in the foregoing manner the residual hydroxyl content thereof is desirably reduced to a level less than 1.0 meq of OH per gram of support, by any of the previously disclosed techniques.

The catalyst systems may be used to polymerize ethylenically and/or acetylenically unsaturated monomers having from 2 to 100,000 carbon atoms either alone or in combination. Preferred monomers include the $C_{2-20}$ $\alpha$-olefins especially ethylene, propylene, isobutylene, 1-butene, 1-pentene, 1-hexene, 3-methyl-1-pentene, 4-methyl-1-pentene, 1-octene, 1-decene, long chain macromolecular $\alpha$-olefins, and mixtures thereof. Other preferred monomers include styrene, $C_{1-4}$ alkyl substituted styrene, tetrafluoroethylene, vinylbenzocyclobutane, ethylidenenorbornene, 1,4-hexadiene, 1,7-octadiene, vinylcyclohexane, 4-vinylcyclohexene, divinylbenzene, and mixtures thereof with ethylene. Long chain macromolecular $\alpha$-olefins are vinyl terminated polymeric remnants formed *in situ* during continuous solution polymerization reactions. Under suitable processing conditions such long chain macromolecular units are readily polymerized into the polymer product along with ethylene and other short chain olefin monomers to give small quantities of long chain branching in the resulting polymer.

In general, the polymerization may be accomplished at conditions well known in the prior art for Ziegler-Natta or Kaminsky-Sinn type polymerization reactions, such as temperatures from 0-250°C and pressures from atmospheric to 1000 atmospheres (0.1 to 100 MPa). Suspension, solution, slurry, gas phase or other process conditions may be employed if desired. The support is preferably employed in an amount to provide a weight ratio of catalyst (based on metal):support from 1:100,000 to 1:10, more preferably from 1:50,000 to 1:20, and most preferably from 1:10,000 to 1:30. Suitable gas phase reactions may utilize condensation of the monomer or monomers employed in the reaction, or of an inert diluent to remove heat from the reactor.

In most polymerization reactions the molar ratio of catalyst:polymerizable compounds employed is from $10^{-12}$:1 to $10^{-1}$:1, more preferably from $10^{-12}$:1 to $10^{-5}$:1.

Suitable solvents for polymerization via a solution process are noncoordinating, inert liquids. Examples include straight and branched-chain hydrocarbons such as isobutane, butane, pentane, hexane, heptane, octane, and mixtures thereof; cyclic and alicyclic hydrocarbons such as cyclohexane, cycloheptane, methylcyclohexane, methylcycloheptane, and mixtures thereof; perfluorinated hydrocarbons such as perfluorinated $C_{4-10}$ alkanes, and aromatic and alkyl-substituted aromatic compounds such as benzene, toluene, and xylene. Suitable solvents also include liquid olefins which may act as monomers or comonomers including ethylene, propylene, 1-butene, butadiene, cyclopentene, 1-hexene, 3-methyl-1-pentene, 4-methyl-1-pentene, 1,4-hexadiene, 1,7-octadiene, 1-octene, 1-decene, styrene, divinylbenzene, ethylidenenorbornene, allylbenzene, vinyltoluene (including all isomers alone or in admixture), 4-vinylcyclohexene, and vinylcyclohexane. Mixtures of the foregoing are also suitable.

The catalysts may also be utilized in combination with at least one additional homogeneous or heterogeneous polymerization catalyst in the same or in separate reactors connected in series or in parallel to prepare polymer blends having desirable properties. An example of such a process is disclosed in WO-A-94/00500, as well as WO-A-94/17112.

One such polymerization process comprises: contacting, optionally in a solvent, one or more α-olefins with a catalyst system according to the present invention, in one or more continuous stirred tank or tubular reactors, or in the absence of solvent, optionally in a fluidized bed gas phase reactor, connected in series or parallel, and recovering the resulting polymer. Condensed monomer or solvent may be added to the gas phase reactor as is well known in the art.

The foregoing technique also allows for the preparation of ethylene/α-olefin interpolymer compositions having a broad range of molecular weight distributions and composition distributions. Particularly desirable α-olefins for use in the foregoing processes are $C_{4-8}$ α-olefins, most desirably 1-octene.

Preparative Example

Materials and Methods.

Unless otherwise stated, all chemical manipulations were performed under nitrogen in either an inert atmosphere glove box or on a nitrogen/vacuum double manifold using standard Schelenk techniques. Zirconium tetrachloride, dichlorodimethylsilane, triethylamine, and 2-propanol are used as received from Aldrich Chemicals Inc.

Example isopropoxymethylsilanebis(tetramethylcyclopentadienyl)zirconium dichloride

Preparation of (isopropoxy)methyldichlorosilane

To 45 mL (0.38 moles) of trichloromethylsilane in 1.5 L of anhydrous ether cooled at 0 °C in an ice bath was added 51.5 mL (0.38 moles) of triethylamine followed by dropwise addition of 29.5 mL (0.38 moles) of 2-propanol. After stirring for 4 hours, the precipitated white solid (triethylamine hydrochloride) was removed by filtration and washed with 2 x 100 mL portions of ether. The ether filtrate and washings were then combined and the solvent removed under reduced pressure leaving the desired product.

Preparation of isopropoxymethylsilanebis (tetramethylcyclopentadiene)

To 7.9 g (0.05 moles) of $MeSi(OiPr)Cl_2$ dissolved in 500 mL of tetrahydrofuran at 0 °C is added 16.0 g (0.10 moles) of potassium tetramethylcyclopentadienide over a 1 hour period. The mixture is brought to reflux and then stirred at room temperature for 4 hour. The slurry is filtered, and washed with tetrahydrofuran and the solvent removed under vacuum to yield the desired product.

Preparation of Dilithium [isopropoxymethylsilanebis-(tetramethylcyclopentadienide)]

To 2.0 g (5.8 mmoles) of isopropoxymethylsilanebis-(tetramethylcyclopentadiene) in 50 mL of diethylether at 0 °C is added dropwise 2.3 mL of n-BuLi (2.5 M in hexanes) over a 1 hour period. The mixture is stirred at room temperature for 6 hours. The solvent is removed under vacuum and the residue washed with hexane to yield the desired product.

Preparation of isopropoxymethylsilanebis(tetramethylcyclopentadienyl)zirconium dichloride

To 2.0 g (5.6 mmol) of dilithium [isopropoxymethylsilanebis-(tetramethylcyclopentadienyl) in 50 mL of THF is slowly added 1.3 g (5.6 mmol) of $ZrCl_4$ over a 30 minute period. After further stirring for three hours the solvent is removed under reduced pressure and the remaining solid recrystallized from n-pentane at -37 °C to yield the desired product.

Polymerization

A two-liter Parr reactor was charged with 740 g of Isopar-E™ mixed alkanes solvent (available from Exxon Chemicals Inc.) and 118 g of 1-octene comonomer. Hydrogen is added as a molecular weight control agent by differential pressure expansion from a 75 mL addition tank at 25 psi (2070 kPa). The reactor is heated to the polymerization temperature of 140 °C and saturated with ethylene at 500 psig (3.4 MPa). 2.0 µmol each of the above metal complex and trisperfluorophenylborane cocatalyst as 0.005 M solutions in toluene are premixed in the drybox. After five minutes premix time, the solution is transferred to a catalyst addition tank and injected into the reactor. The polymerization conditions are maintained for 15 minutes with ethylene on demand. The resulting solution is removed from the reactor, and a hindered phenol antioxidant (Irganox™ 1010 from Ciba Geigy Corporation) is added to the solution. The polymer formed is dried in a vacuum oven set at 120 °C for 20 hours.

## Claims

1. A process for preparing a supported metal complex comprising contacting a metal complex corresponding to the formula:

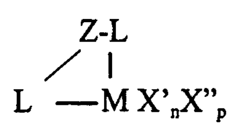

or a dimer, solvated adduct, chelated derivative or mixture thereof,
wherein:

L independently each occurrence is a delocalized π-bonded group that is bound to M and contains up to 50 nonhydrogen atoms;
M is a metal of Group 3, 4 or the Lanthanide series of the Periodic Table of the Elements;
Z is a covalently bound, divalent substituent of up to 50 non-hydrogen atoms having the formula, $-(ER^*_2)_m-$, wherein E independently each occurrence is carbon, silicon or germanium, R* independently each occurrence is selected from $C_{1-20}$ hydrocarbyl, and $C_{1-20}$ hydrocarbyloxy, with the proviso that in at least one occurrence R* is $C_{1-20}$ hydrocarbyloxy, and m is an integer from 1 to 3;
X' is a neutral Lewis base ligand having up to 20 non-hydrogen atoms;
X" independently each occurrence is a monovalent, anionic moiety selected from hydride, halo, hydrocarbyl, silyl, germyl, hydrocarbyloxy, amide, siloxy, halohydrocarbyl, halosilyl, silylhydrocarbyl, and aminohydrocarbyl having up to 20 non-hydrogen atoms, or two X" groups together form a divalent hydrocarbadiyl or neutral hydrocarbon group;
n is a number from 0 to 3; and
p is an integer from 0 to 2,

with an aluminum- or silicon-containing substrate (a) containing hydroxyl, or pendant silane -(Si-R)=, or chlorosilane -(Si-Cl)= functionality, wherein R is a $C_{1-10}$ hydrocarbyl group, with the proviso that the surface hydroxyl content of a hydroxyl functionalized substrate is less than 0.8 mmol per gram support or (b) that has been treated with an alumoxane or with an aluminum compound of the formula $AlR^1_{x'}R^2_{y'}$, wherein $R^1$ independently each occurrence is hydride or R; $R^2$ is hydride, R or OR; x' is 2 or 3; y' is 0 or 1 and the sum of x' and y' is 3, whereby the metal complex is chemically bound to the substrate.

2. A process according to Claim 1 wherein said substrate is an aluminum- or silicon-containing substrate (a) containing hydroxyl, or pendant silane -(Si-R)=, or chlorosilane-(Si-Cl)= functionality, wherein R is a $C_{1-10}$ hydrocarbyl group, with the proviso that the surface hydroxyl content of a hydroxyl functionalized substrate is less than 0.8 mmol per gram support.

3. A process according to Claim 1 or Claim 2 wherein said metal complex corresponds to the formula:

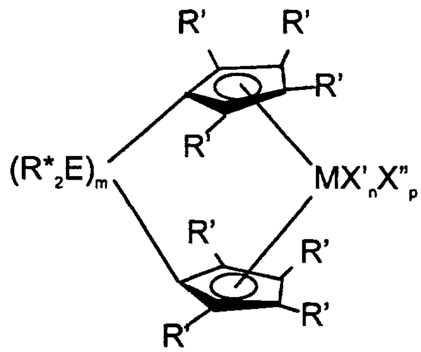

wherein:

M is titanium, zirconium or hafnium, in the +2, +3 or +4 formal oxidation state;
E independently each occurrence is carbon or silicon;
R* independently each occurrence is selected from $C_{1-6}$ hydrocarbyl, and $C_{1-6}$ hydrocarbyloxy, with the proviso that in at least one occurrence R* is $C_{1-6}$ hydrocarbyloxy;
m is 1 or 2;
R' independently in each occurrence is selected from hydrogen, hydrocarbyl, silyl, germyl, cyano, halo and combinations thereof, said R' having up to 20 non-hydrogen atoms each, or adjacent R' groups together form a divalent derivative that is a hydrocarbadiyl, siladiyl or germadiyl group;
X' is a conjugated diene having from 4 to 30 non-hydrogen atoms, which forms a π-complex with M when M is in the +2 formal oxidation state, whereupon n is 1 and p is 0;
X" each occurrence is an anionic ligand group that is covalently bonded to M when M is in the +3 or +4 formal oxidation state, whereupon n is 0 and p is 1 or 2, and optionally two X" groups together for a divalent anionic ligand group.

4. A process according to any one of the preceding claims wherein R' independently in each occurrence is selected from hydrogen, methyl, ethyl, and all isomers of propyl, butyl, pentyl and hexyl, as well as cyclopentyl, cyclohexyl, norbomyl, benzyl, and trimethyl silyl; or adjacent R' groups are linked together thereby forming a fused ring system.

5. A process according to any one of the preceding claims , wherein X' is, $\eta^4$-1,4-diphenyl-1,3-butadiene; $\eta^4$-1,3-pentadiene; $\eta^4$-1-phenyl-1,3-pentadiene; $\eta^4$-1,4-dibenzyl-1,3-butadiene; $\eta^4$-2,4-hexadiene; $\eta^4$-3-methyl-1,3-pentadiene; $\eta^4$-1,4-ditolyl-1,3-butadiene; or $\eta^4$-1,4-bis(trimethylsilyl)-1,3-butadiene.

**6.** A process according to any one of the preceding claims , wherein X" is hydride, chloride, methyl, benzyl, phenyl, tolyl, t-butyl, methoxide, or trimethylsilyl or two X" groups together are 1,4-butanediyl, s-cis(1,3-butadiene), or s-cis(2,3-dimethyl-1,3-butadiene).

**7.** A process according to any one of the preceding claims , wherein E is silicon, m is 1, and R* in at least one occurrence is methoxide, ethoxide or isopropoxide.

**8.** A process according to Claim 7 wherein $(ER^*_2)_m$ is ethoxymethylsilanediyl, isopropoxymethylsilanediyl, 2-butoxymethylsilanediyl, diethoxysilanediyl, diisopropoxysilanediyl, or di(2-butoxy)silanediyl

**9.** A process according to any one of the preceding claims wherein L is cyclopentadienyl, pentamethylcyclopentadienyl, indenyl, tetrahydroindenyl, fluorenyl, tetrahydrofluorenyl, octahydrofluorenyl, or one of the foregoing groups further substituted with one or more methyl, ethyl, propyl, butyl, pentyl, hexyl, (including branched and cyclic isomers), norbornyl, benzyl, phenyl, or naphthyl groups.

**Patentansprüche**

**1.** Verfahren zur Herstellung eines Metallkomplexes auf einem Träger, umfassend Inberührungbringen eines Metallkomplexes entsprechend der Formel:

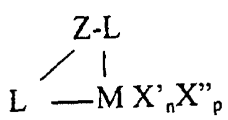

oder eines Dimers, solvatisierten Addukts, Chelatderivats oder einer Mischung davon, worin:

L unabhängig voneinander bei jedem Auftreten eine π-gebundene Gruppe mit delokalisierten Elektronen ist, die an M gebunden ist und bis zu 50 Nichtwasserstoffatome enthält;
M ein Metall der Gruppe 3, 4 oder der Lanthanidenreihe des Periodensystems der Elemente ist;
Z ein kovalent gebundener divalenter Substituent mit bis zu 50 Nichtwasserstoffatomen und der Formel $-(ER^*_2)_m-$ ist, worin E unabhängig voneinander bei jedem Auftreten gleich Kohlenstoff, Silicium oder Germanium ist, R* unabhängig voneinander bei jedem Auftreten ausgewählt ist aus $C_{1-20}$-Hydrocarbyl und $C_{1-20}$-Hydrocarbyloxy, unter der Voraussetzung, dass R* bei mindestens einem Auftreten $C_{1-20}$-Hydrocarbyloxy und m eine ganze Zahl von 1 bis 3 ist;
X' ein neutraler Lewis-Base-Ligand mit bis zu 20 Nichtwasserstoffatomen ist;
X" unabhängig voneinander bei jedem Auftreten eine monovalente anionische Einheit, ausgewählt aus Hydrid, Halogen, Hydrocarbyl, Silyl, Germyl, Hydrocarbyloxy, Amid, Siloxy, Halogenhydrocarbyl, Halogensilyl, Silylhydrocarbyl und Aminohydrocarbyl mit bis zu 20 Nichtwasserstoffatomen, ist oder zwei X"-Gruppen zusammen eine divalente Hydrocarbadiyl- oder neutrale Kohlenwasserstoffgruppe bilden;
n eine ganze Zahl von 0 bis 3 ist und
p eine ganze Zahl von 0 bis 2 ist,
mit einem aluminium- oder siliciumhaltigen Substrat (a), das Hydroxyl- oder Silan-(Si-R)=- oder Chlorsilan-(Si-Cl)=-funktionalität in der Seitengruppe aufweist, worin
R eine $C_{1-10}$-Hydrocarbylgruppe ist, unter der Voraussetzung, dass der Hydroxylgehalt an der Oberfläche eines hydroxylfunktionalisierten Substrats weniger als 0,8 mmol pro Gramm Träger beträgt, oder (b), das mit einer Alumoxan- oder einer Aluminiumverbindung der Formel $AlR^1_{x'}R^2_{y'}$ behandelt worden ist, worin
$R^1$ unabhängig voneinander bei jedem Auftreten Hydrid oder R ist;
$R^2$ Hydrid, R oder 0R ist;
x' gleich 2 oder 3 ist;
y' gleich 0 oder 1 ist and
die Summe von x' und y' gleich 3 ist,

wobei der Metallkomplex chemisch an das Substrat gebunden ist.

**2.** Verfahren nach Anspruch 1, worin dieses Substrat ein aluminiumoder siliciumhaltiges Substrat (a) ist, das Hydroxyl- oder Silan-(Si-R)=- oder Chlorsilan-(Si-Cl)=-funktionalität in der Seitengruppe aufweist, worin

R eine $C_{1-10}$-Hydrocarbylgruppe ist, unter der Voraussetzung, dass der Hydroxylgehalt an der Oberfläche eines hydroxylfunktionalisierten Substrats weniger als 0,8 mmol pro Gramm Träger beträgt.

**3.** Verfahren nach Anspruch 1 oder Anspruch 2, worin dieser Metallkomplex der Formel entspricht:

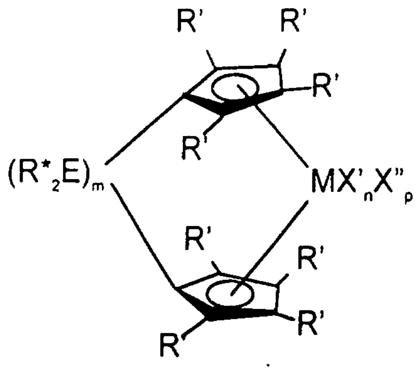

worin:

M gleich Titan, Zirkonium oder Hafnium in der formalen Oxidationsstufe +2, +3 oder +4 ist;
E unabhängig voneinander bei jedem Auftreten Kohlenstoff oder Silicium ist;
R* unabhängig voneinander bei jedem Auftreten ausgewählt ist aus $C_{1-6}$-Hydrocarbyl und $C_{1-6}$-Hydrocarbyloxy, unter der Voraussetzung, dass R* bei mindestens einem Auftreten $C_{1-6}$-Hydrocarbyloxy ist;
m gleich 1 oder 2 ist;
R' unabhängig voneinander bei jedem Auftreten ausgewählt ist aus Wasserstoff, Hydrocarbyl, Silyl, Germyl, Cyano, Halogen und Kombinationen daraus, wobei jedes R' bis zu 20 Nichtwasserstoffatome aufweist oder benachbarte R'-Gruppen zusammen ein divalentes Derivat bilden, das eine Hydrocarbadiyl-, Siladiyloder Germadiylgruppe ist;
X' ein konjugiertes Dien mit 4 bis 30 Nichtwasserstoffatomen ist, das mit M einen π-Komplex bildet, wenn M in der formalen Oxidationsstufe +2 vorliegt, und dabei n gleich 1 und p gleich 0 ist;
X" bei jedem Auftreten eine anionische Ligandengruppe ist, die kovalent an M gebunden ist, wenn M in der formalen Oxidationsstufe +3 oder +4 vorliegt, und dabei n gleich 0 und p gleich 1 oder 2 ist, und fakultativ zwei X"-Gruppen zusammen eine divalente anionische Ligandengruppe ausbilden.

**4.** Verfahren nach einem der vorstehenden Ansprüche, worin R' unabhängig voneinander bei jedem Auftreten ausgewählt ist aus Wasserstoff, Methyl, Ethyl und allen Isomeren von Propyl, Butyl, Pentyl und Hexyl ebenso wie Cyclopentyl, Cyclohexyl, Norbornyl, Benzyl und Trimethylsilyl oder benachbarte R'-Gruppen miteinander verbunden sind und dabei ein anelliertes Ringsystem ausbilden.

**5.** Verfahren nach einem der vorstehenden Ansprüche, worin X' gleich $\eta^4$-1,4-Diphenyl-1,3-butadien, $\eta^4$-1,3-Pentadien, $\eta^4$-1-Phenyl-1,3-pentadien, $\eta^4$-1,4-Dibenzyl-1,3-butadien, $\eta^4$-2,4-Hexadien, $\eta^4$-3-Methyl-1,3-pentadien, $\eta^4$-1,4-Ditolyl-1,3-butadien oder $\eta^4$-1,4-Bis(trimethylsilyl)-1,3-butadien ist.

**6.** Verfahren nach einem der vorstehenden Ansprüche, worin X" gleich Hydrid, Chlorid, Methyl, Benzyl, Phenyl, Tolyl, t-Butyl, Methoxid oder Trimethylsilyl ist oder zwei X"-Gruppen zusammen 1,4-Butandiyl, s-cis(1,3-Butadien) oder s-cis(2,3-Dimethyl-1,3-butadien) sind.

**7.** Verfahren nach einem der vorstehenden Ansprüche, worin E gleich Silicium ist, m gleich 1 ist und R* bei mindestens einem Auftreten Methoxid, Ethoxid oder Isopropoxid ist.

**8.** Verfahren nach Anspruch 7, worin $(ER^*_2)_m$ gleich Ethoxymethylsilandiyl, Isopropoxymethylsilandiyl, 2-Butoxymethylsilandiyl, Diethoxysilandiyl, Diisopropoxysilandiyl oder Di(2-butoxy)silandiyl ist.

**9.** Verfahren nach einem der vorstehenden Ansprüche, worin L gleich Cyclopentadienyl, Pentamethylcyclopentadienyl, Indenyl, Tetrahydroindenyl, Fluorenyl, Tetrahydrofluorenyl, Octahydrofluorenyl ist oder eine der vorstehenden Gruppen, die weiterhin mit einer oder mehreren Methyl-, Ethyl-, Propyl-, Butyl-, Pentyl-, Hexyl-(einschließlich verzweigter und cyclischer Isomere), Norbornyl-, Benzyl-, Phenyl- oder Naphthylgruppen substituiert sind.

## Revendications

**1.** Procédé de préparation d'un complexe métallique sur support comprenant la mise en contact d'un complexe métallique correspondant à la formule :

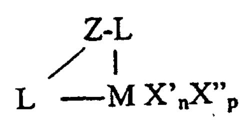

ou un dimère, produit d'addition solvaté, dérivé chélaté ou mélange de ceux-ci,
dans laquelle :

chaque L est indépendamment un groupe à liaison π délocalisée qui est lié à M et contient jusqu'à 50 atomes non-hydrogène ;
M est un métal des groupe 3, 4 ou de la série des lanthanides de la table périodique des éléments ;
Z est un substituant divalent à liaison covalente comprenant jusqu'à 50 atomes non-hydrogène ayant la formule $-(ER^*_2)_m-$, dans laquelle cha-

que E est indépendamment du carbone, du silicium ou du germanium, chaque R* est indépendamment choisi parmi un hydrocarbyle en $C_{1-20}$ et un hydrocarbyloxy en $C_{1-20}$, à condition qu'au moins un des R* soit un hydrocarbyloxy en $C_{1-20}$, et m est un entier de 1 à 3 ;

X' est un ligand base de Lewis neutre comprenant jusqu'à 20 atomes non-hydrogène ;

chaque X" est indépendamment un groupe anionique monovalent choisi parmi un hydrure, un halogène, un hydrocarbyle, un silyle, un germyle, un hydrocarbyloxy, un amide, un siloxy, un halogéno-hydrocarbyle, un halogénosilyle, un silylhydrocarbyle et un aminohydrocarbyle comprenant jusqu'à 20 atomes non-hydrogène, ou deux groupes X" formant ensemble un groupe hydrocarbadiyle divalent ou hydrocarboné neutre ;

n est un nombre de 0 à 3 ; et

p est un entier de 0 à 2,

avec un substrat contenant de l'aluminium ou du silicium (a) qui contient une fonctionnalité hydroxyle ou silane -(Si-R)=, ou chlorosilane -(Si-Cl)= pendante, où R est un groupe hydrocarbyle en $C_{1-10}$, à condition que la teneur en hydroxyles de surface d'un substrat fonctionnalisé hydroxyle soit inférieure à 0,8 mmole par gramme de support ou (b) qui a été traité avec un alumoxane ou avec un composé d'aluminium de formule $AlR^1_xR^2_y$, dans lequel chaque $R^1$ est indépendamment un hydrure ou R ; $R^2$ est un hydrure, R ou OR ; x' est 2 ou 3 ; y est 0 ou 1 et la somme de x' et y' est 3, de telle manière que le complexe de métal soit chimiquement lié au substrat.

2. Procédé selon la revendication 1 dans lequel ledit substrat est un substrat contenant de l'aluminium ou du silicium (a) qui contient une fonctionnalité hydroxyle ou silane -(Si-R)=, ou chlorosilane -(Si-Cl) = pendante, où R est un groupe hydrocarbyle en $C_{1-10}$, à condition que la teneur en hydroxyle de surface d'un substrat fonctionnalisé en hydroxyle soit inférieure à 0,8 mmole par gramme de support.

3. Procédé selon la revendication 1 ou la revendication 2 dans lequel ledit complexe métallique correspond à la formule :

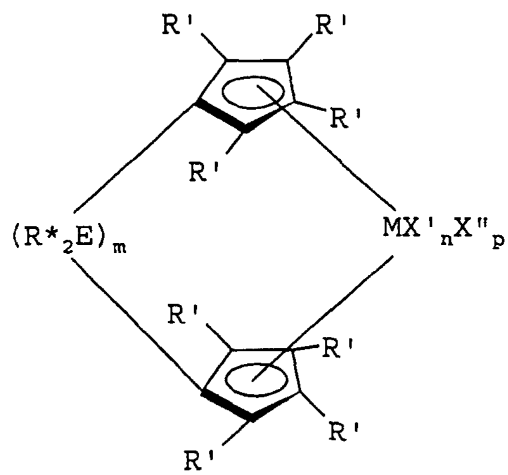

dans laquelle :

M est le titane, le zirconium ou l'hafnium, à l'état d'oxydation formel +2, +3 ou +4 ;

chaque E est indépendamment un carbone ou un silicium ;

chaque R* est indépendamment choisi parmi un hydrocarbyle en $C_{1-6}$ et un hydrocarbyloxy en $C_{1-6}$, à condition qu'au moins un R* soit un hydrocarbyloxy en $C_{1-6}$ ;

m est égal à 1 ou 2 ;

chaque R' est indépendamment choisi parmi un hydrogène, un hydrocarbyle, un silyle, un germyle, un cyano, un halogène et des combinaisons de ceux-ci, chacun des R' comprenant jusqu'à 20 atomes non-hydrogène, ou bien des groupes R' adjacents forment ensemble un dérivé divalent qui est un groupe hydrocarbadiyle, siladiyle ou germadiyle ;

X' est un diène conjugué comprenant de 4 à 30 atomes non-hydrogène, qui forme un complexe π avec M lorsque M est à l'état d'oxydation formel +2, auquel cas n est 1 et p est 0 ;

chaque X" est un groupe ligand anionique qui est lié de manière covalente à M lorsque M est à l'état d'oxydation formel +3 ou +4, auquel cas n est 0 et p est 1 ou 2, et éventuellement deux groupes X" forment un groupe ligand anionique divalent.

4. Procédé selon l'une quelconque des revendications précédentes dans lequel chaque R' est indépendamment choisi parmi un hydrogène, un méthyle, un éthyle, et tous les isomères des propyle, butyle, pentyle et hexyle, ainsi que cyclopentyle, cyclohexyle, norbornyle, phényle, naphtyle, benzyle et triméthylsilyle ; ou bien des groupes R' adjacents sont liés l'un à l'autre pour former un système cyclique condensé.

**5.** rocédé selon l'une quelconque des revendications précédentes, dans lequel X' est $\eta^4$-1,4-diphényle-1,3-butadiène ; $\eta^4$-1,3-pentadiène; $\eta^4$-1-phényl-1,3-pentadiène ; $\eta^4$-1,4-dibenzyl-1,3-butadiène ; $\eta^4$-2,4-hexadiène ; $\eta^4$-3-méthyl-1,3-pentadiène ; $\eta^4$-1,4-ditolyl-1,3-butadiène ; ou $\eta^4$-1,4-bis(triméthylsilyl)-1,3-butadiène.

**6.** Procédé selon l'une quelconque des revendications précédentes, dans lequel X" est un hydrure, chlorure, méthyle, benzyle, phényle, tolyle, t-butyle, méthoxyde, ou triméthylsilyle ou bien deux groupes X" joints sont le 1,4-butanediyle, le s-cis(1,3-butadiène) ou le s-cis(2,3-diméthyl-1,3-butadiène).

**7.** Procédé selon l'une quelconque des revendications précédentes, dans lequel E est le silicium, m est 1, et au moins un des R* est un méthoxyde, un éthoxyde ou un isopropoxyde.

**8.** Procédé selon la revendication 7, dans lequel ($ER^*_2$) est un éthoxyméthylsilanediyle, un isopropoxy-méthylsilanediyle, un 2-butoxyméthylsilanediyle, un diéthoxysilanediyle, un diisopropoxysilanediyle ou un di(2-butoxy)silanediyle.

**9.** Procédé selon l'une quelconque des revendications précédentes, dans lequel L est un cyclopentadiényle, pentaméthylcyclopentadiényle, indényle, tétrahydro-indényle, fluorényle, tétrahydrofluorényle, octahydrofluorényle, ou l'un des groupes ci-dessus substitués plus avant avec un ou plusieurs groupes méthyle, éthyle, propyle, pentyle, hexyle (isomères ramifiés et cycliques inclus), norbornyle, benzyle, phényle ou napthyle.